# EUROPEAN PATENT APPLICATION

(11) **EP 1 994 853 A1**
(43) Date of publication of application: **26.11.2008**
(21) Application number: 06729168.2
(22) Date of filing: 15.03.2006
(51) Int. Cl.: A45D 33/34

(54) **COSMETIC TOOL**

(71) Applicant: Shiseido Company, Limited, Chuo-ku Tokyo 104-8010 (JP); Taiki Corp., Ltd., Miyakojima-ku Osaka-shi Osaka 534-0014 (JP)
(72) Inventor: BABE, Takeshi, SHISEIDO RESEARCH CENTER, Yokohama-shi, Kanagawa, 224-8558 (JP); NAKAMURA, Koji, Higashi Yodogawa-ku, Osaka-shi, Osaka (JP)
(74) Representative: Daniels, Jeffrey Nicholas
(86) International application number: PCT/JP2006/305147
(87) International publication number: WO 2006/095912

(57) **Abstract**

A cosmetic tool **characterized in that**: its structure is such that the first sheet to fourth sheet are stitched up along their peripheries, with the stitched part prevented from projecting outward along the entire periphery; a powder cosmetic material is filled between the second sheet and third sheet allowing powder to pass through; a foamed sheet having through holes is placed between the first sheet and second sheet and/or between the third sheet and fourth sheet; and the passing amount of aforementioned powder cosmetic material is different on the first sheet side and fourth sheet side; and therefore the transuding amount of powder cosmetic material varies and thereby excellent efficiency is achieved when used for cosmetic purposes.

## Description

### Technical Field

The present invention relates to an easy-to-use cosmetic tool with powder cosmetic material embedded inside, consisting of layered sheets comprised of at least four layers.
To be more specific, the present invention relates to a cosmetic tool that controls the transuding degree of powder cosmetic material by utilizing the difference in powder passing property between the sheet housing powder cosmetic material and sheets forming the two outer sides of the aforementioned sheet, or by utilizing a foamed sheet that allows powder to pass through. Specifically, the present invention relates to a cosmetic tool suitable for use in a powder room, washroom or bathroom, etc., for skin cleansing, skin treatment, massaging or makeup purposes.

### Prior Art

Traditionally, skin cleansing implements, applicators, massaging implements, cosmetic implements, pads and various other items have been used as cosmetic tools. Examples of cosmetic tools include skin cleansing implements. To cleanse one's face, hands, legs and body, traditionally face sponges, body cleaners or other cleansing implements have been used, along with a cleansing agent applied separately.
On the other hand, pads are used to spread powder cosmetic material over the skin surface or massage the skin. Although pads are also used for cleansing purposes, those made of fabric are found not convenient to use, because of difficulty in handling, floppiness and poor efficiency.

A general-purpose cleansing implement used on human body is widely known through Japanese Patent Laid-open No. Hei 8-182633 (Patent Literature 1). This cleansing implement is formed by a bag, comprising a front cover and a back cover each trimmed with a trimming fabric, and a polyurethane foam is stored in the empty space inside the bag. The front cover may be made of a plain weave fabric made of 100% silk, blended yarn fabric woven by both silk and hemp, or blended yarn fabric woven by fibers other than silk and hemp, among others, where the weaving method can be any desired method other than plain weaving and any fabric other than those mentioned above can also be used. The back cover is made of a mesh fabric having many small openings, but the material used to make the back cover is not specified in any specific way. However, this product has a drawback in that because both the front cover and back cover are trimmed, the production process takes a longer time and more components are needed. Also, this product is not convenient for use outside home, because the necessary cosmetic material is not stored inside.

A puff containing cleansing agent is widely known through Japanese Utility Model Registration No. 3048155 (Patent Literature 2). This puff containing cleansing agent comprising a circular bag made of two silk fabrics stitched together in such a way as to provide a cleansing-agent filler port in one part along the stitches, a cleansing powder filled in this fabric bag through the cleansing-agent filler port, and an elastic deformation member made of a circular sponge stored in the aforementioned fabric bag, where the aforementioned cleansing-agent filler port is stitched up after the powder cleansing agent and elastic deformation member have been filled and inserted. This product is associated with poor usability because the amount of cosmetic material passing through the fabric is constant and cannot be adjusted.

Cosmetic implements used for massaging or cleansing in a bath are also widely known, an example of which is the implement described in Japanese Utility Model Laid-open No. Sho 60-14791 (Patent Literature 3). This product comprises one side made of a crinkle or plain weave fabric consisting of nylon or other appropriate chemical synthetic fiber, and the other side made of a non-woven fabric consisting of nylon or other appropriate chemical synthetic fiber, with a polyurethane foam or other appropriate synthetic fiber sandwiched between the two sides and stitched up or bonded to make an integrated structure. However, this product presents poor usability because powder cosmetic material is not contained inside.

In addition, pads whose surface material comprises not fabric, but multiple layers of foams stacked on top of one another are also known, where basic cosmetic pads made of layered foams are widely known such as the one described in Japanese Patent Laid-open No. Hei 9-220118 (Patent Literature 4).
The pad described in the aforementioned patent literature comprises foams, or specifically two sheets having substantially the same size and outer shape whose mouths are put together and stitched up around their peripheries, with the empty space between the two sheets containing a water-soluble or water-emulsifying powder component for cosmetic, skincare or pharmacological use, where the aforementioned cosmetic component, etc., is transuded through the foams on both sides. However, products like this have the stitched part directly exposed to the outside, which makes it easy for the periphery of the product to come undone while the cosmetic material is used. Also, these products do not provide a function to adjust the transuding amount of powder component, are difficult to use in makeup, and offer poor feeling of use. If the periphery is applied to the skin, the user easily feels uncomfortable and if the user has sensitive skin, he/she may also feel pain due to irritation. These factors reduce the usability of these products.
As explained above, conventional cosmetic tools with powder cosmetic material or cleansing agent embedded inside make it easy for the aforementioned powder to transude excessively, and also it is totally impossible with these conventional cosmetic tools to control the transuding degree of powder differently between the front side and back side.
In addition, conventional cosmetic tools all have a simple symmetrical structure, which makes it impossible to achieve different feelings of use, such as ease of handling, texture, body, touch, cushion property, etc., on the front side and back side.
As a result, no cosmetic tools have been available to date that would respond to the diverse needs of users such as realization of various beauty effects and enhancement of such beauty effects.
Patent Literature 1: Japanese Patent Laid-open No. Hei 8-182633
Patent Literature 2. Japanese Utility Model Registration No. 3048155
Patent Literature 3: Japanese Utility Model Laid-open No. Sho 60-14791
Patent Literature 4: Japanese Patent Laid-open No. Hei 9-220118

### Summary of the Invention

### Problems to Be Solved by the Invention

In light of the situations explained above, the present invention aims to provide a cosmetic tool capable of realizing efficient skin cleansing, makeup, skin treatment and massaging and also offering excellent feeling of use, by controlling to an appropriate level the amount of powder cosmetic material supplied from inside the bag to the outside of the cosmetic tool, while varying the aforementioned amount on the first sheet (front) side and fourth sheet (back) side. The present invention also aims to provide a multi-functional cosmetic tool designed for use on both sides, by controlling the transuding amount or supplying amount of powder cosmetic material on the front side and back side, while varying the feeling of use or usability such as ease of handling, texture, body, touch, cushion property, etc., on the front side and back side.
Furthermore, the present invention aims to provide a cosmetic tool designed for use on both sides, by keeping the manufacturing process simple, while controlling the powder and fiber sheet materials to specific types and also controlling the aperture characteristics of the foamed sheet, thereby providing a novel cosmetic tool offering diverse functionality to answer the diverse needs of consumers.

### Means for Solving the Problems

The present invention is based on the following constitutions:
(1) A cosmetic tool characterized in that: its structure is such that four fiber sheets from first sheet to fourth sheet are stacked on top of one another and stitched up along their peripheries, with the stitched part prevented from projecting outward along the entire periphery; a powder cosmetic material is filled between the second sheet and third sheet allowing powder to pass through; a foamed sheet allowing powder to pass is placed between the first sheet and second sheet and/or between the third sheet and fourth sheet; and therefore transuding of the aforementioned powder to the outside is adjusted.
(2) A cosmetic tool according to (1) above, characterized in that the aforementioned foamed sheet has at least one through hole.
(3) A cosmetic tool according to (1) or (2) above, characterized in that the transuding of powder is adjusted by the aforementioned foamed sheet.
(4) A cosmetic tool according to any one of (1) to (3) above, characterized in that transuding of powder is adjusted by the difference in mesh size between the first sheet and second sheet and/or difference in mesh size between the third sheet and fourth sheet.
(5) A cosmetic tool according to any one of (1) to (4) above, characterized in that the transuding amount of aforementioned powder is different on the first sheet side and fourth sheet side.
(6) A cosmetic tool according to any one of (1) to (5) above, characterized in that the foamed sheet placed on the first sheet side is different from the foamed sheet placed on the fourth sheet side.
(7) A cosmetic tool according to any one of (1) to (6) above, characterized in that the feeling of use is different on the first sheet side and fourth sheet side.
(8) A cosmetic tool according to any one of (1) to (7) above, characterized in that the aforementioned four fiber sheets are stitched up along a line inside the outer periphery by leaving some opening in the circumferential direction, after which the stitched sheets are turned inside out and then the aforementioned opening is stitched up.
(9) A cosmetic tool according to any one of (1) to (8) above, characterized in that the aforementioned powder cosmetic material contains at least one component selected from the group that includes rice bran, bentonite and kaolin.
(10)A cosmetic tool according to any one of (1) to (9) above, characterized in that the aforementioned cosmetic tool is selected from the group that includes a skin cleansing implement, skin treatment implement, massaging implement and makeup implement.
(11)A cosmetic tool according to any one of (1) to (10) above, characterized in that when the aforementioned cosmetic tool contacts water during use, the mixture of water and powder cosmetic material will transude to the outside from the first sheet and fourth sheet.

### Effects of the Invention

The cosmetic tool proposed by the present invention is an implement having a layered structure comprising at least four fiber sheets, powder cosmetic material, and foamed sheet allowing powder to pass through, where the amount of powder cosmetic material transuding or supplied to the outside of the cosmetic tool is adjusted by the relationship among the inner sheets encasing the powder cosmetic material, outer sheets, and foamed sheet, and preferably the aforementioned amount varies between the front and back.
As the outer sheets, the first sheet and fourth sheet can have different properties or a foamed sheet allowing powder to pass through can be inserted, in order to add different skin sensations such as texture, touch, cushion property and body. Also, the amount of powder cosmetic material having effective beauty benefits, or grain size of powder to be delivered, can be changed between the front and back. For example, a mesh-like non-woven fabric that passes through more powder cosmetic material when in use, or fine silk non-woven fabric 1 that passes through less cosmetic powder material, can be used as deemed necessary to achieve greater ease of use and excellent usability. As explained above, a single cosmetic tool can achieve multiple beauty effects by offering different sensations of use on both sides, and this cosmetic tool is also effective in promoting these beauty effects. For example, one side of the cosmetic tool proposed by the present invention can be used for pre-treatment, while the other side can be used for finishing. Alternatively, one side can be used for removing dead skin cells, while the other side can be used for moisture-keeping treatment.

In addition to its utility as a cosmetic puff or applicator, the cosmetic tool proposed by the present invention can also provide similar effects when used as a skin cleansing implement, skin treatment implement, massaging implement, makeup implement, patting implement, etc.
The cosmetic tool proposed by the present invention is structured in such a way that the periphery of its side face does not project outward. Accordingly, it does not give uncomfortable feel on the skin, but provides comfortable touch instead, even when the side face is used, and the resulting diverse feelings of use will surely satisfy consumers.

### Brief Description of the Drawings

- [Fig. 1]: Cross-section view, before stitching, of the layers of fiber sheets that form a cosmetic tool conforming to the present invention
- [Fig. 2]: Plan view of Fig. 1
- [Fig. 3]: Cross-section view of fiber sheets whose peripheries have been stitched up (except for the opening)
- [Fig. 4]: Plan view of Fig. 3
- [Fig. 5]: Cross-section view of fiber sheets that have been turned inside out
- [Fig. 6]: Plan view of Fig. 5
- [Fig. 7]: Cross-section view of a finished product in which powder cosmetic material has been filled and a foamed sheet has been inserted
- [Fig. 8]: Plan view of Fig. 7
- [Fig. 9]: Different example showing a cross-section view of a foamed sheet
- [Fig. 10]: Figure illustrating the sheet structures of Examples 1 to 5

### Description of the Symbols

1 First sheet
2 Second sheet
3 Third sheet
4 Fourth sheet
5 Powder cosmetic material
6 Foamed sheet (allowing powder to pass through)
7 Through hole
9 Stitched part
10 Non-stitched part
11 Opening

### Best Embodiments of the Invention

Ideal component materials of the cosmetic tool proposed by the present invention are explained in details below.
The first through fourth fiber sheets under the present invention are sheets selected from the group that includes woven, knitted and non-woven fabrics, among others. Their shapes are not limited in any specific way, and any of the various geometric shapes such as circle, oval, square, rectangle, parallelogram, trapezoid and diamond can be used.
The second sheet and third sheet on the inside are used to encase powder cosmetic material, and any sheets can be used as long as they allow the powder inside to be supplied to the outside. Appropriate levels of weight per unit area and thickness of these sheets are approx. 10 to 30 g/m² and 0.1 to 0.5 mm, respectively, in consideration of powder passing property. The second sheet and third sheet may comprise identical sheets or different sheets.
Materials for these sheets are not limited in any specific way, but polyester, polyamide, polyolefin, polyacrylonitrile and other synthetic fibers, rayon and other recycled fibers, or cotton, hemp, silk, wool and other natural fibers can be used favorably.

Next, the fiber sheets constituting the first sheet and fourth sheet contact the skin directly and add the specified touch and wiping feel. As for these first sheet and fourth sheet, it is desirable to select appropriate sheet materials according to the purpose of use, such as using sheet materials of different mesh sizes or surface friction coefficients. For example, a coarse-meshed sheet can be used as the first sheet, while a fine-meshed sheet can be used as the fourth sheet.
This way, the skin rubbing effect increases with a coarse-meshed sheet, in which case the skin cleansing effect will improve when the invention is used as a cleansing implement. If it is used as a massaging implement, the massaging effect will improve significantly. When a fine-meshed sheet is used, on the other hand, the resulting soft touch can enhance the treatment effect and also makes the invention an effective finishing tool for makeup.
One favorable example is to combine the first sheet made of a coarse-meshed fiber sheet and the fourth sheet made of a silk fiber sheet offering flexibility and fine mesh, because such combination removes dead skin cells and other waste products to leave the skin feeling soft.

When these outer sheets are stacked with the inner sheets, or namely the second sheet and third sheet, the restriction effect of the resulting structure makes it possible to control the amount of powder transuding or supplied to the outside of the cosmetic tool. Without the first sheet and fourth sheet on the outside, an excess amount of powder cosmetic material will transude to the outside, which is not appropriate.
Appropriate levels of weight per unit area and thickness of these sheets are approx. 10 to 100 g/m² and 0.3 to 0.8 mm, respectively, in consideration of powder transuding property.
It is desirable that the outer sheets have greater weight per unit area or higher density than the inner sheets. Desired levels of bulk density are 0.05 to 0.2 g/cm³. More preferably, the bulk density should be 0.06 to 0.18 g/cm³.
In addition, the aforementioned first sheet and fourth sheet may comprise identical sheets or different sheets. To achieve multiple functions, it is desirable to combine sheets offering different properties, such as combining a coarse-meshed sheet and a fine-meshed sheet. Examples of the aforementioned coarse-meshed sheet include those having a mesh size of approx. 0.5 to 3 mm or preferably 0.7 to 2 mm, while examples of the aforementioned fine-meshed sheet include those having a mesh size of approx. 0.4 to 0.05 mm or preferably 0.5 to 0.01 mm.
By varying the mesh size between the first sheet and fourth sheet, it becomes possible to vary the amount of powder transuding through the sheet mesh, as well as the grain size of powder, which allows for realization of different beauty effects. It is also possible to allow the primary component of powder cosmetic material composition to transude mainly from the first sheet side, while allowing the secondary component to transude mainly from the fourth sheet side.
Fiber materials for forming these first sheet and fourth sheet are not limited in any specific way, but polyester, polyamide, polyolefin, polyacrylonitrile and other synthetic fibers, rayon and other recycled fibers, or cotton, hemp, silk, wool and other natural fibers can be used favorably. Among natural fibers, silk presents a very soft touch and use of silk also allows sericin and other beauty components contained in silk to be rubbed into the skin, resulting in enhanced moisture-keeping effect.

Next, a foamed sheet allowing powder to pass through is placed between the first sheet and second sheet and/or between the third sheet and fourth sheet. The purposes of providing this foamed sheet include pinpointing the amount of powder cosmetic material passing through to the outside, improving the ease of handling, as well as adding texture, volume, comfortable touch on skin, body and cushion property to the cosmetic tool.
The material of this foamed sheet is not limited in any specific way, and any sheet material can be used as long as it allows the powder cosmetic material in the implement to pass through it, and as long as it can pinpoint the passing amount of powder cosmetic material and add texture and cushion property. Among the various materials, elastic foamed sheets made of desired materials, such as ester polyurethane, ether polyurethane and other polyurethanes, NBR (nitrile butadiene rubber), SBR (styrene butadiene nibber), CR (chloroprene rubber), NR (nitrile rubber) and other synthetic rubbers, natural rubbers, polyolefins, celluloses, and their derivatives, can be used favorably.
The thickness of this foamed sheet material should preferably be in a range of approx. 2 mm to 10 mm, or more preferably in a range of approx. 3 mm to 8 mm. In terms of impact resilience ratio of this foamed sheet material (conforming to JIS K-6401), foamed sheet materials having an impact resilience ratio of approx. 30 to 90%, or a lower impact resilience ratio of approx. 5 to 30%, can be used. A foamed sheet material offering the necessary characteristics can be selected according to the purpose of use.
In the aforementioned foamed sheet, holes connecting both sides are formed to allow powder cosmetic material to pass through. Various foaming means may be employed such as those that increase the foaming factor to achieve a structure having continuous air bubbles, and it is also possible to provide mechanically pierced or stamped holes that connect both sides of the sheet. When the flexibility of material selection and machined surface are considered, mechanical through holes are desired. The positions of these through holes are not limited in any specific way, and only one hole may be provided, or two or more holes may be set in distributed positions. Through holes can be provided as straight holes in the vertical direction relative to the surface of the foamed sheet, or they can be provided as slant holes or meandering holes.
The aperture ratio (ratio to projected area) of through holes should preferably be in a range of approx. 5 to 50%. If the aperture ratio is less than 5%, the passing property of powder cosmetic material becomes too low. If the aperture ratio exceeds 50%, on the other hand, it becomes difficult to control the passing amount of powder. More preferably, the aperture ratio should be in a range of approx. 10 to 40%. These through holes can be formed so that they will have circular, oval, square, trapezoidal or other desired geometrical shape two-dimensionally. By providing through holes, the resulting restriction effect allows powder cosmetic material to transude in desired locations.

This foamed sheet can be placed only between the first sheet and second sheet, or it can also be placed only between the third sheet and fourth sheet. Depending on the condition, the foamed sheet can be placed in both locations.
The foamed sheet, thus placed between sheets, also exhibits impact resilience and therefore provides the effect of promoting the supply of powder to the outside through the so-called pumping function, stemming from the elastic deformation that occurs when the cosmetic tool contacts the skin, and also from the recovery elasticity that is exerted when the cosmetic tool is removed from the skin surface.
As explained above, the transuding amount of powder, touch, rubbing feel, body, ease of handing and other sensations of use can be controlled differently on the first sheet side and fourth sheet side, even when a single cosmetic material is filled inside, by providing a layered structure including a foamed sheet. Accordingly, a single cosmetic tool can be designed to have multiple functions. Also, these multiple functions allow beauty effects to be promoted in a synergistic manner.

Next, the powder cosmetic material used under the present invention is explained.
Various solid beauty materials, whose use as a cosmetic material has been approved, can be blended. Examples of these beauty materials include various powder cleansing agents, cell activation agents, blood-circulation promoting agents, moisture-keeping agents, emollient agents, dead-skin-cell removing agents, smoothing agents, whitening agents, extenders, mineral grains, oil-based components, vitamins, percutaneous-absorption promoting agents, animal/plant-based substances, colorants and antibacterial agents, among others.
Among the aforementioned substances, those that are considered particularly favorable for inclusion in the blend are rice bran among animal/plant-based substances, bentonite, kaolin, talc and mica among mineral grains, xylitol, erythritol, trehalose and dextrin among moisture-keeping agents, as well as glycine and its derivatives, α-hydroxy acid and β-hydroxy acid, among others.
If the cosmetic tool is moistened with water, such as when it is used as a skin cleansing implement, it is desirable to use a water-soluble cosmetic material blend. Any desired powder cosmetic material can be used, as long as it can pass through the mesh of the fiber sheets and holes in the foamed sheet, and it is also possible to use a classification means, etc. to design the average grain size and grain size distribution of powder cosmetic material as desired according to the purpose.

The cosmetic tool proposed by the present invention can be used in dry condition, or it can also be used in wet condition by allowing it to contact and absorb water at the time of use.
The powder cosmetic material may be soluble, insoluble, or slightly soluble in water. Whatever the solubility, moisture produces the effect of promoting the transuding of cosmetic material to the outside.

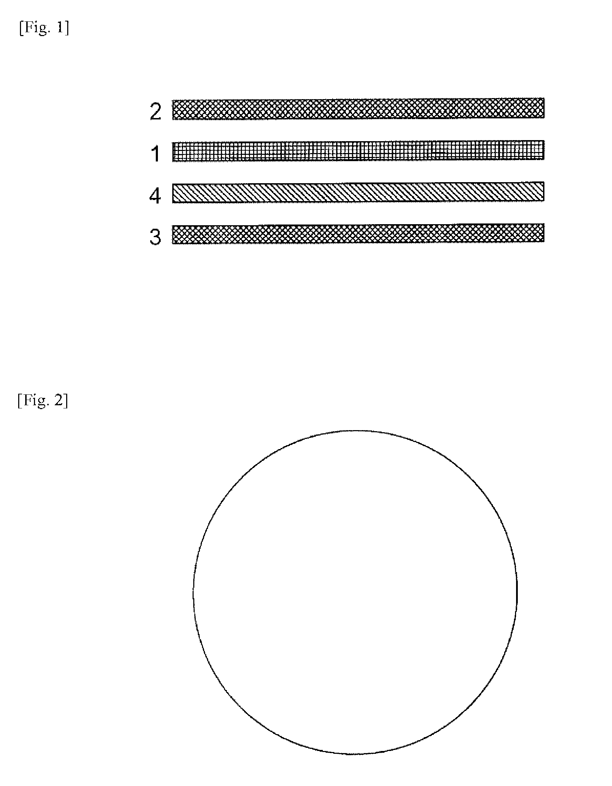

The method for producing the cosmetic tool proposed by the present invention is explained in details by using a skin cleansing implement as an example and by referring to Figs. 1 to 8 illustrating the manufacturing process.

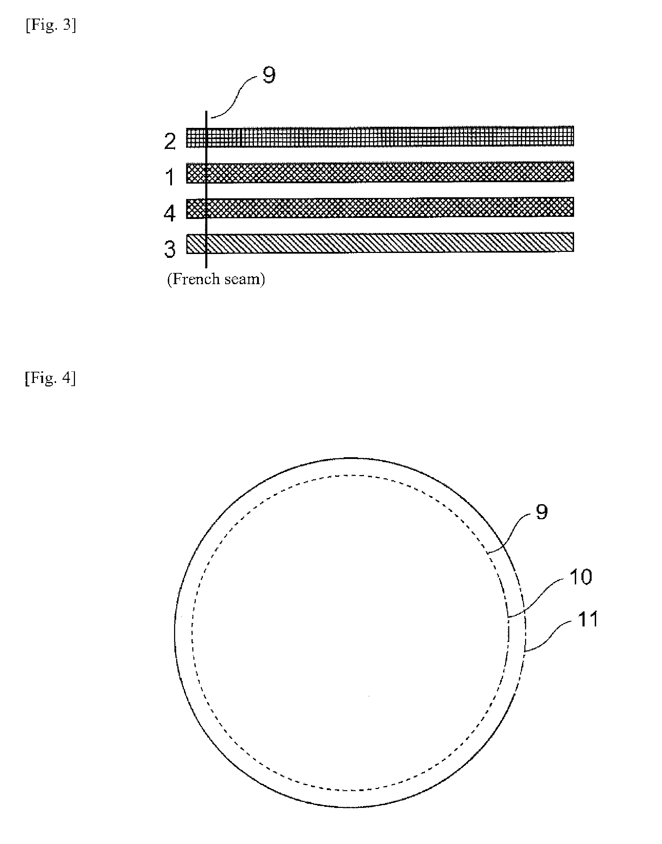

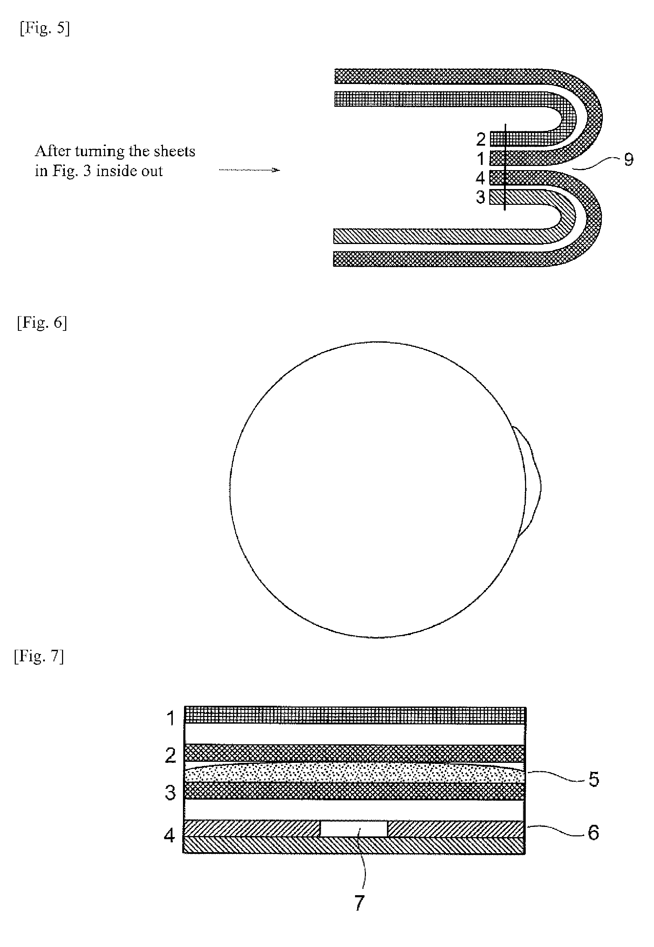

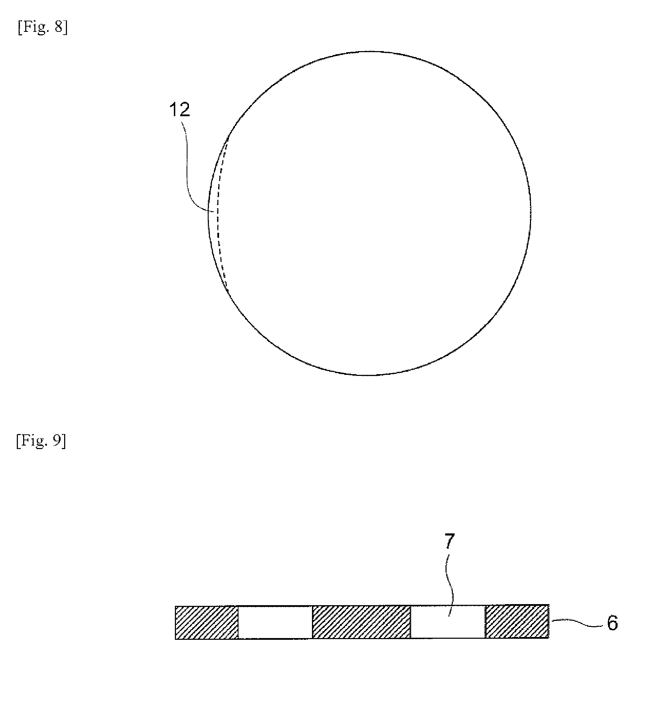

Fig. 1 is a cross-section view of layered fiber sheets before stitching, Fig. 2 is a plan view of Fig. 1, Fig. 3 is a cross-section view of fiber sheets whose peripheries have been stitched up, Fig. 4 is a plan view of Fig. 3, Fig. 5 is a cross-section view of the stitched bag in Fig. 4 that has been turned inside out, Fig. 6 is a plan view of Fig. 5, Fig. 7 is a cross-section view of a cosmetic tool in which powder cosmetic material has been filled and a foamed sheet has been inserted, Fig. 8 is a plan view of Fig. 7, and Fig. 9 is a cross-section view of a foamed sheet (different example).

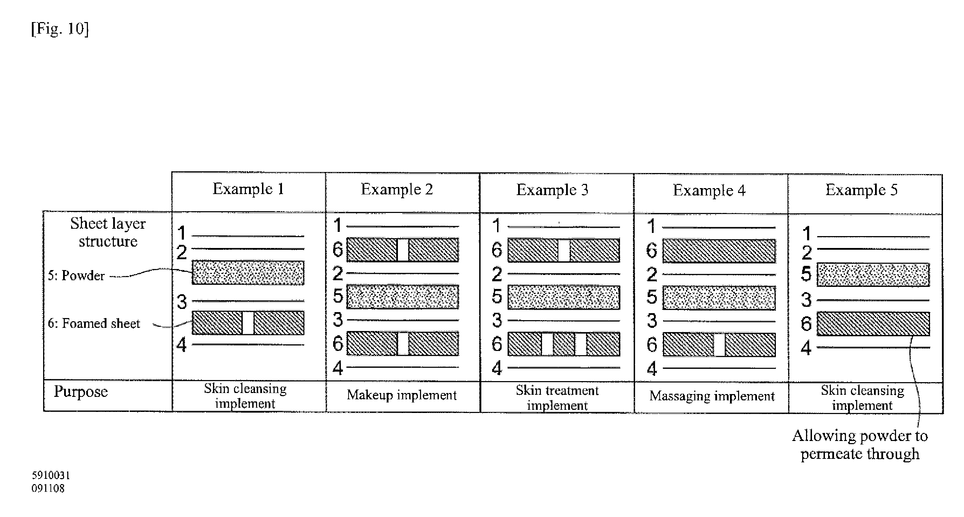

Fig. 10 shows the sheet structures of Examples 1 through 4.

First, four fiber sheets (1, 2, 3, 4) made of non-woven, woven or knitted fabrics are used, as shown in Fig. 1, where, among these four fiber sheets, 1 indicates the first sheet made of a mesh-like non-woven fabric, 2 and 3 indicate the second sheet and third sheet each made of an ordinary synthetic-fiber non-woven fabric, while 4 indicates the fourth sheet made of a fine-meshed silk non-woven fabric.
In top view, the second sheet 2, first sheet 1, fourth sheet 4 and third sheet 3 are stacked in this order, and stitched together except for one part in the circumferential direction, as shown in Fig. 3. 9 indicates a stitching thread. (The stitching line is running slightly inward of the outermost periphery.)

Next, the bag is turned inside out from the unstitched part 10 serving as an opening for turning 11. After the bag has been turned, the layers are arranged in the order of first sheet 1, second sheet 2, third sheet 3 and fourth sheet 4, as shown in Fig. 5.
Then, after turning the bag, powder cosmetic material is introduced through the opening 11 and filled between the second sheet and third sheet, after which a foamed sheet allowing powder to pass through is inserted between the third sheet and fourth sheet, and finally the aforementioned opening 11 is stitched up in such a way that the ends are on the inside.
By using the aforementioned steps, a complicated process can be avoided and the number of components can be reduced. In addition, the obtained cosmetic tool has its peripheral edges stitched together neatly, and will not come apart during use as is often the case with conventional products. Also, no trim fabric is used, which makes this cosmetic tool the one offering comfortable touch and great ease of use.
Furthermore, this cosmetic tool has a built-in foamed sheet having through holes, which improves the ease of handling and achieves excellent texture, volume and luxury feel.
Since the structure is asymmetrical between the front and back, the body of the front side can be made different from that of the back side or otherwise the two sides of a single cosmetic tool can be utilized, which increases the cost-effectiveness of use. Example 1

### <Skin Cleansing Implement>

As shown in Table 1 summarizing the sheet structures, the first sheet 1 is made of a mesh-like non-woven fabric (Bemliese C4751 by Asahi Kasei Corporation; Composition - PET (polyethylene terephthalate) (30%) / Cupra rayon (70%)), while the second sheet 2 uses a PP (polypropylene) non-woven fabric (weight per unit area 18 g/m²) allowing powder to pass through. Accordingly, the passing amount of powder cosmetic material 5 is greater on the first sheet 1 side.
The third sheet 3 is also a PP non-woven fabric (weight per unit area 18 g/m²) allowing powder to pass through, similar to one used for the second sheet 2. The fourth sheet 4 uses a silk non-woven fabric (silk 100%, weight per unit area 30 g/m²) having fine mesh. In other words, the fourth sheet 4 side can be used for detailed skincare.
These four fiber sheets were cut to a circular shape and stacked on top of one another as shown in Fig. 1, after which their peripheries were stitched up, except for one part, to form an opening. Then, the bag-shaped sheets were turned inside out through this opening.

A powder cosmetic material containing rice bran and kaolin was filled between the second sheet and third sheet, while an ester-polyurethane elastic foamed sheet (thickness 5 mm) having through holes (hole diameter 30 mmØ, aperture ratio 20%) was inserted between the third sheet and fourth sheet, after which the opening was stitched up and sealed to obtain a cosmetic tool (skin cleansing implement, outer diameter 75 mmØ) conforming to the present invention.
This implement was soaked in warm water during bathing and used for cleansing of face. As a result, transuding to the implement's surface of cosmetic material sealed inside the implement was observed. The transuding amount of cosmetic material was different between the first sheet side and fourth sheet side.
First, the coarse-meshed first sheet side was used to rub the face to remove sebum, dead skin cells and other waste products. As a result, the cosmetic tool exhibited remarkably high cleansing performance due to the synergistic effects of the scraping action by the irregular surface of the sheet and the cosmetic material transuding preferentially from the mesh of the sheet.
Next, the fine-meshed fourth sheet side was used to provide finishing touches. As a result, the fourth sheet side was found extremely soft to touch and the actions of fine rice bran component and silk-containing component exhibited extremely high beauty effects that left the skin silky and smooth.
As explained above, the sensation of use was different on both sides of the cosmetic tool, and the users gave positive comments on its novelty.

### Example 2

### <Makeup Implement>

The first sheet and fourth sheet made of a fine-meshed silk non-woven fabric (silk 100%, weight per unit area 30 g/m²), and second sheet and third sheet made of a polyester non-woven fabric (weight per unit area 20 g/m²) allowing powder to pass through, were prepared and formed into a circular shape, respectively. These sheets were stacked on top of one another as shown in Fig. 1, after which their peripheries were stitched up via French seam, except for one part, in the same manner as in Example 1. Then, the sheets were turned inside out through the opening. A powdery foundation containing talc, mica, kaolin and colorant was introduced through this opening and filled between the second sheet and third sheet as powder cosmetic material.
Next, an elastic foamed sheet (foaming factor 3.6 times, outer diameter 70 mmØ x thickness 4 mm) made of NBR (nitrile butadiene rubber) and having through holes (aperture ratio 16%) was inserted between the first sheet and second sheet, and another elastic foamed sheet (foaming factor 5.1 times, outer diameter 70 mmØ x thickness 6 mm) made of NBR and having through holes (aperture ratio 16%) was inserted between the third sheet and fourth sheet, and then the opening was stitched up to produce a makeup implement. (The foaming factor and thickness were different between the two foamed sheets.)

With this makeup implement, the foaming factor of the foamed sheet inserted on the first sheet side was different from that of the foamed sheet inserted on the fourth sheet side, so that the permeating amount of powder could be adjusted differently between the first sheet and fourth sheet due to the difference in compressive elasticity between the two foamed sheets.
Also, both of the outer sheets used a silk non-woven fabric, which made the cosmetic tool very soft to touch, like silk, when used for makeup. Also, the body was different between the front and back, which made it easy to use the cosmetic tool optimally in different areas of the face having significant concavities and convexities. As a result, the skin could be made up beautifully without producing areas of mottled foundation.
Also, the outer sheets present near the through holes were concaved when pressed. Accordingly, sebum and other dirt on the skin could be removed effectively through rubbing action.
As explained above, the sensation of use was different on both sides of the cosmetic tool, and the users gave positive comments on its novelty. Example 3

### <Skin Treatment Implement>

The first sheet made of a coarse-meshed non-woven fabric (Bemliese C4751 by Asahi Kasei Corporation; Composition - PET (30%) / Cupra rayon (70%)), fourth sheet made of a fine-meshed silk non-woven fabric (silk 100%, weight per unit area 30 g/m²), and second sheet and third sheet each made of a polypropylene non-woven fabric (weight per unit area 17 g/m²) allowing powder to pass through, were prepared and formed to a square shape (8 cm x 8 cm), respectively. These sheets were stacked on top of one another as shown in Fig. 1, after which their peripheries were stitched up via French seam, except for one part, and then the sheets were turned inside out through the opening. A cosmetic material for skin treatment blending glycine, citric acid, and erythritol as a moisture-keeping agent, was introduced through this opening and filled between the second sheet and third sheet as powder cosmetic material.
Next, an ester-polyurethane foamed sheet having one through hole (aperture ratio 18%) was inserted between the first sheet and second sheet, while a polyethylene foamed sheet having two through holes (total aperture ratio 24%) was inserted between the third sheet and fourth sheet, after which the opening was stitched up to obtain a skin treatment implement.
Thus obtained treatment implement was soaked in water and rubbed against the face and neck along the skin surface using the first sheet side. As a result, dead skin cells, sebum and other dirt could be removed efficiently through a combination of the physical rubbing effect of the sheet and the effect of dissolved cosmetic material.

Next, the fourth sheet side was used to rub and treat the same location, which allowed the moisture-keeping component to permeate efficiently into the stratum corneum through the fine-meshed silk non-woven fabric. The cosmetic tool was also very soft to touch and offered excellent treatment effect.
The treatment effect could be enhanced markedly by varying the mesh size and friction property between the outer sheet materials, while also varying the material and opening characteristics between the foamed sheet on the first sheet side and foamed sheet on the fourth sheet side.
As explained above, the sensation of use was different on both sides of the cosmetic tool, and the users gave positive comments on its novelty.

### Example 4

### <Massaging Implement>

The first sheet made of a coarse-meshed non-woven fabric (Bemliese C4751 by Asahi Kasei Corporation; Composition - PET (30%) / Cupra rayon (70%)), fourth sheet made of a fine-meshed silk non-woven fabric (silk 100%, weight per unit area 30 g/m²), and second sheet and third sheet each made of a polypropylene non-woven fabric (weight per unit area 18 g/m²) allowing powder to pass through, were prepared and formed to a square shape (8 cm x 8 cm), respectively. These sheets were stacked on top of one another as shown in Fig. 1, after which their peripheries were stitched up via French seam, except for one part, and then the sheets were turned inside out through the opening. A cosmetic material for massaging containing scrub agent and kaolin was introduced through this opening and filled between the second sheet and third sheet as powder cosmetic material.
Next, an ester-polyurethane foamed sheet having no through hole (sheet A) was inserted between the first sheet and second sheet, while a polyethylene foamed sheet having one through hole (aperture ratio 12%) (sheet B) was inserted between the third sheet and fourth sheet, after which the opening was stitched up to obtain a massaging implement. (The impact resilience ratio was different between sheet A and sheet B.)

First, the fine-meshed fourth sheet side was caused to contact the skin surface to apply the powder cosmetic material over the skin surface. Because a fine-meshed sheet was used and a foamed sheet with an aperture ratio of 12% was inserted to control the supplied amount of powder, the fine powder mainly constituted by kaolin migrated slowly to the skin surface.
Next, the opposite side, or coarse-meshed first sheet side, was used to rub the skin surface. As a result, the scrub agent was preferentially supplied to the skin surface.
By repeating the massaging action by turning over the cosmetic tool, the skin was stimulated by the hard foamed sheet and soft foamed sheet. To be specific, strong stimulations by the coarse-meshed sheet and soft stimulations by the fine-meshed sheet were applied cyclically, and these stimulations produced synergistic effects with the physiological action of cosmetic material to provide extremely high massaging effect.
Also, this massaging implement did not discharge cosmetic material at once, and thus could be used for a long period.
As explained above, the sensation of use was different on both sides of the cosmetic tool, and the users gave positive comments on its novelty.

### Example 5

### <Skin Cleansing Implement>

Similarly to Example 1, the first sheet 1 was made of a mesh-like non-woven fabric (Bemliese C4751 by Asahi Kasei Corporation; Composition - PET (30%) / Cupra rayon (70%)), second sheet 2 was made of a PP non-woven fabric (weight per unit area 18 g/m²) allowing powder to pass through, and third sheet 3 was also made of a PP non-woven fabric (weight per unit area 18 g/m²) allowing powder to pass through, similar to the one used for the second sheet 2. The fourth sheet 4 used a silk non-woven fabric (silk 100%, weight per unit area 30 g/m²) offering fine mesh.
These four fiber sheets were cut to a circular shape and stacked on top of one another as shown in Fig. 1, after which their peripheries were stitched up, except for one part, to form an opening. Then, the bag-shaped sheets were turned inside out through this opening.
A powder cosmetic material containing rice bran and kaolin was filled between the second sheet and third sheet, while a NBR elastic foamed sheet (thickness 5 mm) having continuous air bubbles made at high foaming factor and also allowing powder to pass through was inserted between the third sheet and fourth sheet, after which the opening was stitched up and sealed to obtain a cosmetic tool (skin cleansing implement, outer diameter 75 mmØ) conforming to the present invention.

This implement was soaked in warm water during bathing and used for cleansing of face. As a result, transuding to the implement's surface of cosmetic material sealed inside the implement was observed. The transuding amount of cosmetic material was different between the first sheet side and fourth sheet side.
First, the coarse-meshed first sheet side was used to rub the face to remove sebum, dead skin cells and other waste products. As a result, the cosmetic tool exhibited remarkably high cleansing performance due to the synergistic effects of the scraping action by the irregular surface of the sheet and the cosmetic material transuding preferentially from the mesh of the sheet.
Next, the fine-meshed fourth sheet side was used to provide finishing touches. As a result, the fourth sheet side was found extremely soft to touch and the actions of fine rice bran component and silk-containing component exhibited extremely high beauty effects that left the skin silky and smooth.
As explained above, the sensation of use was different on both sides of the cosmetic tool, and the users gave positive comments on its novelty.

The materials constituting Examples 1 through 5 are shown in Table 1, while the respective layer structures are shown in Fig. 10.

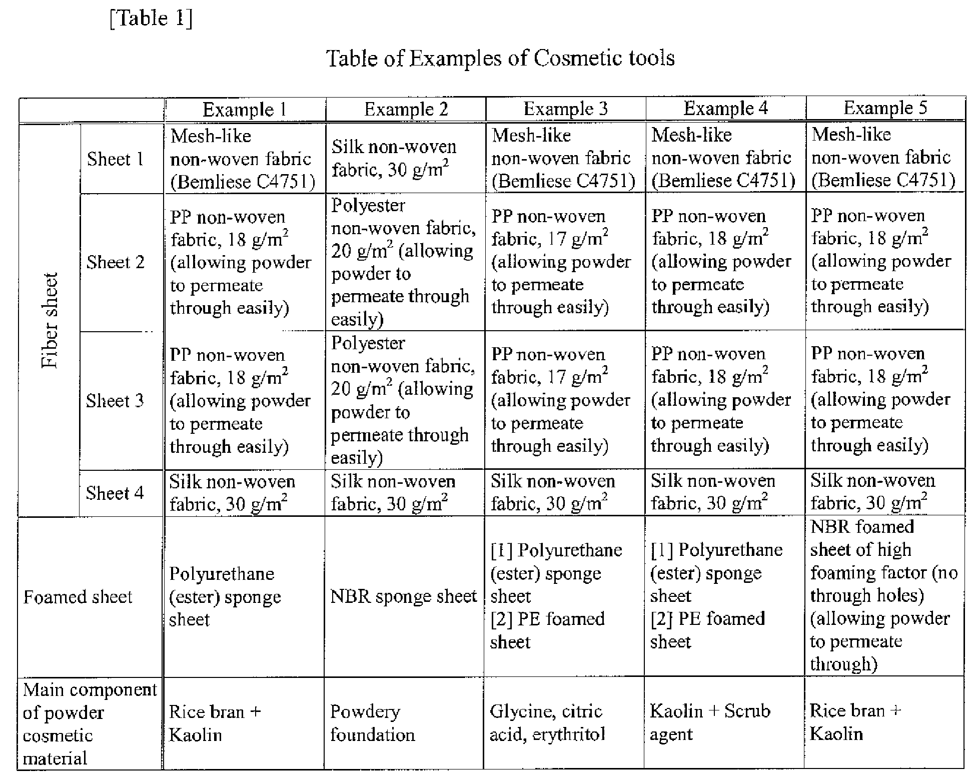

As described in Examples above, it was found that a cosmetic tool offering excellent beauty effects, skin-roughness prevention effects and anti-aging effects to keep the skin healthy, and therefore most ideal for skin cleansing, makeup, treatment, massaging, etc., could be achieved by using a powder cosmetic material containing at least one component selected from the group that includes rice bran, bentonite and kaolin.

## Claims

1. A cosmetic tool **characterized by** having a structure wherein four fiber sheets from first sheet to fourth sheet are stacked on top of one another and stitched together along their peripheries, with the stitched part which do not outwardly protrude along the entire periphery; a powder cosmetic material is filled between the second sheet and third sheet which are powder-permeable; a powder-permeable foamed sheet is placed between the first sheet and second sheet and/or between the third sheet and fourth sheet, whereby transuding of the aforementioned powder to the outside is adjusted.

2. The cosmetic tool according to Claim 1, **characterized in that** the aforementioned foamed sheet has at least one through hole.

3. The cosmetic tool according to Claim 1 or 2, **characterized in that** the transuding of powder is adjusted by the aforementioned foamed sheet.

4. The cosmetic tool according to any one of Claims 1 to 3, **characterized in that** transuding of powder is adjusted by the difference in mesh size between the first sheet and second sheet and/or difference in mesh size between the third sheet and fourth sheet.

5. The cosmetic tool according to any one of Claims 1 to 4, **characterized in that** the transuding amount of aforementioned powder is different on the first sheet side and fourth sheet side.

6. The cosmetic tool according to any one of Claims 1 to 5, **characterized in that** the foamed sheet placed on the first sheet side is different from the foamed sheet placed on the fourth sheet side.

7. The cosmetic tool according to any one of Claims 1 to 6, **characterized in that** the feeling of use is different on the first sheet side and fourth sheet side.

8. The cosmetic tool according to any one of Claims 1 to 7, **characterized in that** the aforementioned four fiber sheets are stitched together along a line inside the outer periphery by leaving some opening in the circumferential direction, after which the stitched sheets are turned inside out and then the aforementioned opening is stitched up.

9. The cosmetic tool according to any one of Claims 1 to 8, **characterized in that** the aforementioned powder cosmetic material contains at least one component selected from the group that includes rice bran, bentonite and kaolin.

10. The cosmetic tool according to any one of Claims 1 to 9, **characterized in that** the aforementioned cosmetic tool is selected from the group that includes a skin cleansing implement, skin treatment implement, massaging implement and makeup implement.

11. The cosmetic tool according to any one of Claims 1 to 10, **characterized in that** when the aforementioned cosmetic tool contacts water during use, the mixture of water and powder cosmetic material will transude to the outside from the first sheet and fourth sheet.
